# EUROPEAN PATENT SPECIFICATION

(11) **EP 2 314 636 B1**
(45) Date of publication and mention of the grant of the patent: **29.08.2012**
(21) Application number: 09382228.6
(22) Date of filing: 23.10.2009
(51) Int. Cl.: C08F 283/00, C08G 18/10, C08G 18/67, C08L 51/08, C09J 151/08, C08G 18/70, C09J 175/04

(54) **Aqueous hybrid polyurethane-acrylic adhesives**
Wässrige Hybrid-Polyurethanacrylklebstoffe
Adhésifs hybrides polyuréthane/acrylique aqueux

(43) Date of publication of application: 27.04.2011
(73) Proprietor: Universidad Del Pais Vasco-Euskal Herriko Unibertsitatea, 48940 Leioa (Bizkaia) (ES)
(72) Inventor: Lopez Elorza, Aitziber, E-20500, Arrasate - Mondragón - Gipuzkoa (ES); Asua Gonzalez, José M., E-20018, Donostia - San Sebastián - Gipu (ES)
(74) Representative: ABG Patentes, S.L.

(56) References cited:
- EP-A1- 1 167 454
- US-B1- 6 787 596
- WANG C ET AL: "Hybrid polymer latexes: acrylics-polyurethane from miniemulsion polymerization: properties of hybrid latexes versus blends" POLYMER, ELSEVIER SCIENCE PUBLISHERS B.V, GB, vol. 46, no. 4, 7 February 2005 (2005-02-07), pages 1113-1124, XP004721910 ISSN: 0032-3861
- MATTHIEU BARRÈRE AND KATHARINA LANDFESTER: "High Molecular Weight Polyurethane and Polymer Hybrid Particles in Aqueous Miniemulsion" MACROMOLECULES, ACS, WASHINGTON, DC, US, vol. 36, 1 January 2003 (2003-01-01), pages 5119-5125, XP002484087 ISSN: 0024-9297 [retrieved on 2003-06-20]
- ASUA J M: "Miniemulsification of Monomer-Resin Hybrid Systems" INDUSTRIAL & ENGINEERING CHEMISTRY RESEARCH, AMERICAN CHEMICAL SOCIETY, US, vol. 47, no. 16, 1 January 2008 (2008-01-01), pages 6289-6297, XP009130214 ISSN: 0888-5885

## Description

This invention relates to aqueous pressure sensitive adhesives comprising acrylic-polymer/polyurethane hybrids, especially to pressure sensitive adhesives having high adhesion over a wide range of temperature and a process for their preparation.

Waterborne pressure sensitive adhesives (PSA) are used for a variety of applications due to their ability to form a bond at room temperature immediately upon contact, merely by application of light pressure.

A major disadvantage of most waterborne pressure sensitive adhesives (PSA) is that by chemical nature, they often have low cohesive strength. This failure is particularly noticeable at high temperatures since PSA are thermoplastic and they soften rapidly at temperatures above 60°C.

In the prior art, the stress strength at high temperature has been achieved with pressure sensitive adhesives compositions prepared by copolymerizing acrylate monomers with hard macromonomers (see for example WO 02/22755 A2; US 4,551,388; US 5,578,683) the hard macromonomer being the key constituent. The term "hard", as used herein, refers to macromonomers with a glass transition temperature, Tg, typically greater than 40°C. None of the macromonomers used in these patents is polyurethane. The macromonomers are synthesized by using chain transfer agents such as mercaptans (which exhibit offensive odour), hypophosphites and sulfates (which introduce undesired salts into de process). Alternatively transition metal chelates may be used. In both cases, this involves a two-step process, first the macromonomers have to be prepared and then they are used in the copolymerization with the acrylate monomers.

US 6,281,298 also describes that pressure sensitive adhesives compositions that exhibit high shear strength may also be prepared in a two-step process by combining an acrylic polymer and one aminoplast (melamine-formaldehyde; urea-formaldehyde) resin. However, because environmental and health protection regulations formaldehyde-free PSAs are desirable.

In order to obtain improved properties, it is sometimes desirable to combine different polymers (for example polyurethanes) with the conventional polymers (for example acrylics) used in waterborne pressure sensitive adhesives. This can be done, for example, by combining an aqueous dispersion of acrylic polymer with a dispersion of particles of some other polymer but this often causes haziness in the dried adhesive film due to the incompatibility of the individual polymers of differing refractive index. Phase separation may also cause loss of mechanical properties as disclosed, for example, in Kukanja et al. J. Appl. Polym. Sci 2000, 78 (1), 67-70 and in Wang et al. Polymer, 2005, 4, 1113-1124. Chemical linkage between the acrylic polymer and the second polymer (for example polyurethane) may make compatible the different polymers and reduce these drawbacks

W02008/116033 discloses a solvent-based pressure sensitive adhesive formulation comprising a preformed acrylate polymer with at least one crosslinkable functional group, a liquid oligomer (which can be a polyurethane) having at least one crosslinkable group, and a crosslinking agent (such as aluminum acetyl acetone, polyamide, multivalent metal complexes). However, because environmental and health protection regulations the use of solvents is undesirable.

US 2008/0262131 discloses an aqueous adhesive composition prepared by mixing a dispersion of a copolymer of ethylene, vinyl acetate, and optionally at least one (meth)acrylate with another dispersion of a polyurethane having carboxyl and carbodiimide groups or a mixture of a polyurethane having carboxyl and a carbodiimide. This process involves the preparation of two aqueous dispersions and the degree of contact between the acrylic and the polyurethane is limited by the size of the dispersed particles.

W02008/083991 discloses adhesive compositions based on the polymerization of acrylic monomers in the presence of specially modified polyurethane polymers or prepolymers having pendant and/or terminating double bonds. This process requires polyurethane modification to incorporate the double bond functionality into the polyurethane prepolymers.

There are some disclosures of acrylic/polyurethane hybrid dispersions (US 5,977,215, W02002/055576, EP 0 742 239, US 5,173,526, US 4,644,030, WO 2003/054093) which however fail to teach that the compositions have any utility as adhesive compositions.

US 5,977,215 describes a self-crosslinkable coating obtained by mixing and polymerizing a water-dispersible isocyanate terminated pre-polymer with pendant carboxyl groups with a water dispersion of acrylate monomers comprising glycidyl (meth)acrylate. The water-dispersible pre-polymer contains pendant carboxyl groups to provide stability to the dispersion, which makes the stability of the dispersion pH dependent.

W02002/055576 describes a process to make a polymer dispersion comprising: (a) forming a mixture of (1) an isocyanate terminated prepolymer without ionic groups and (2) at least one monomer containing a double bond in which the prepolymer is soluble; (b) dispersing the mixture in water; and (c) polymerizing and chain extending in a single step. The resulting films have a continuous polyurethane phase and they are disclosed as coating materials.

EP 0 742 239 describes coating materials. According to this document in a first step an isocyanate terminated polyurethane prepolymer containing carboxyl groups is mixed with monomers and reacted with an alkanolamine to obtain a hydroxyl-terminated polyurethane prepolymer/monomer mixture. In a second step, this mixture is dispersed in water. In a third step acrylic monomers (which may have hydroxyl groups) are polymerized using preferably an oil-soluble initiator. The resulting hybrid dispersion is mixed with a water dispersable polyisocyanate.

US 5,173,526 describes coating formulations obtained by preparing an aqueous dispersion of carboxyl containing water-dispersible isocyanate-terminated polyurethane prepolymer together with acrylate monomers (comprising diol diacrylates) and a tertiaty amine. The dispersion is polymerized in the presence of an oil-soluble initiator and a chain extender.

US 4,644,030 describes a process for obtaining a polyurethane/acrylic hybrid composition by dispersing in water a mixture of an isocyanate terminated polyurethane prepolymer, which may have double bonds in the chain, and acrylic monomers devoid of groups that may react with the isocyanate groups, chain extending to fully react the prepolymer and then polymerizing the acrylic monomer.

WO 2003/054093 describes a coating formulation obtained by preparing a water-dispersable polyurethane prepolymer formed using a urethane diol. The prepolymer is then mixed with monomer, emulsified in water, chain extended and finally polymerized.

A major disadvantage of most waterborne pressure sensitive adhesives (PSA) is that by chemical nature, they often have low cohesive strength. This failure is particularly noticeable at high temperatures since PSA are thermoplastic and they soften rapidly at temperatures above 60°C.

There is a need for a simple inexpensive process in which waterborne pressure sensitive adhesives (PSAs) that exhibit high shear strength when subjected to increased thermal (and/or mechanical) stress can be produced.

We have found that waterborne pressure sensitive adhesives (PSA) compositions having high adhesion over a wide range of temperature may be prepared by polymerizing a well defined mixture of acrylic and methacrylic monomers comprising one or more acrylate or methacrylate having active hydrogens in the presence of an isocyanate terminated polyurethane prepolymer and optionally a chain extender.

In one aspect, the present invention is directed to a process for manufacturing an adhesive composition comprising the steps of:
(I) forming an aqueous dispersion comprising:
   (a) 1 to 35 % by weight, based on the total weight of the mixture of the prepolymer (a), mixture of monomers (b) and mixture of monomers (c), of one or more non water soluble, non water dispersible polyurethane prepolymer comprising free unreacted isocyanate groups
   (b) 45.5 to 99 % by weight, based on the total weight of the mixture of the prepolymer (a), mixture of monomers (b) and mixture of monomers (c), of a mixture of monomers comprising:
      (b1) 67 to 99.6 % by weight, based on the total weight of the mixture of monomers (b), of one or more esters of acrylic acid or methacrylic acid selected from the group comprising the esters whose homopolymer has a Tg of less than -20°C but not including the esters having active hydrogens able to react with isocyanate groups;
      (b2) 0.1 to 20 % by weight, based on the total weight of the mixture of monomers (b), of one or more esters of acrylic acid or methacrylic acid selected from the group comprising the esters whose homopolymer has a Tg greater than -20°C but not including the esters having active hydrogens able to react with isocyanate groups;
      (b3) 0.2 to 3 % by weight, based on the total weight of the mixture of monomers (b), of one or more esters of acrylic or methacrylic acid comprising a functional group having an active hydrogen capable of reacting with the unreacted isocyanate groups of the polyurethane prepolymer; and
      (b4) 0.1 to 10 % by weight, based on the total weight of the mixture of monomers (b), of acrylic acid, methacrylic acid or mixtures thereof
   (d) optionally, one or more compounds devoid of double bonds and having at least one active hydrogen capable of reacting with the unreacted isocyanate groups of the polyurethane prepolymer;
   (e) optionally, a catalyst;
   (f) optionally, a free radical initiator; and
   (g) optionally, a chain transfer agent
(II) optionally causing the dispersion to react
(III) optionally adding:
   (c) 0 to 43% by weight, based on the total weight of the mixture of monomers (b), of a mixture of monomers optionally dispersed in water comprising:
      (c1) 70 to 99.8 % by weight, based on the total weight of the mixture of monomers (c), of one or more esters of acrylic acid selected from the group comprising the esters whose homopolymer has a Tg of less than -20 °C but not including the esters having active hydrogens able to react with isocyanate groups;
      (c2) 0.1 to 20 % by weight, based on the total weight of the mixture of monomers (c), of one or more ester of acrylic acid or methacrylic acid selected from the group comprising the esters whose homopolymer has a Tg greater than -20°C but not including the esters having active hydrogens able to react with isocyanate groups;
      (c3) 0.1 to 10 % by weight, based on the total weight of the mixture of monomers (c), of acrylic acid, methacrylic acid or mixtures thereof
   (f) optionally a free radical initiator; and
   (g) optionally a chain transfer agent
(IV) causing the mixture to react to form a dispersion of polyurethane-acrylic polymer hybrid particles comprising from 30 to 70 % by weight of solids.

In another aspect the present invention is directed to an adhesive composition obtainable by the process described above.

In still another aspect the present invention is directed to a pressure sensitive coated sheet material comprising a flexible backing sheet and a coating of the adhesive composition as hereinabove defined.

The process for manufacturing an adhesive composition according to the present invention comprises the steps of:
(I) forming an aqueous dispersion comprising:
   (a) 1 to 35 % by weight, based on the total weight of the mixture of the prepolymer (a), mixture of monomers (b) and mixture of monomers (c), of one or more non water soluble, non water dispersible polyurethane prepolymer comprising free unreacted isocyanate groups
   (b) 45.5 to 99 % by weight, based on the total weight of the mixture of the prepolymer (a), mixture of monomers (b) and mixture of monomers (c), of a mixture of monomers comprising:
      (b1) 67 to 99.6 % by weight, based on the total weight of the mixture of monomers (b), of one or more esters of acrylic acid or methacrylic acid selected from the group comprising the esters whose homopolymer has a Tg of less than -20 °C but not including the esters having active hydrogens able to react with isocyanate groups;
      (b2) 0.1 to 20 % by weight, based on the total weight of the mixture of monomers (b), of one or more esters of acrylic acid or methacrylic acid selected from the group comprising the esters whose homopolymer has a Tg greater than -20 °C but not including the esters having active hydrogens able to react with isocyanate groups;
      (b3) 0.2 to 3 % by weight, based on the total weight of the mixture of monomers (b), of one or more esters of acrylic or methacrylic acid comprising a functional group having an active hydrogen capable of reacting with the unreacted isocyanate groups of the polyurethane prepolymer; and
      (b4) 0.1 to 10 % by weight, based on the total weight of the mixture of monomers (b), of acrylic acid, methacrylic acid or mixtures thereof
   (d) optionally, one or more compounds devoid of double bonds and having at least one active hydrogen capable of reacting with the unreacted isocyanate groups of the polyurethane prepolymer;
   (e) optionally, a catalyst;
   (f) optionally, a free radical initiator; and
   (g) optionally, a chain transfer agent
(II) optionally causing the dispersion to react
(III) optionally adding:
   (c) 0 to 43% by weight, based on the total weight of the mixture of monomers (b), of a mixture of monomers optionally dispersed in water comprising:
      (c1) 70 to 99.8 % by weight, based on the total weight of the mixture of monomers (c), of one or more esters of acrylic acid selected from the group comprising the esters whose homopolymer has a Tg of less than -20 °C but not including the esters having active hydrogens able to react with isocyanate groups;
      (c2) 0.1 to 20 % by weight, based on the total weight of the mixture of monomers (c), of one or more ester of acrylic acid or methacrylic acid selected from the group comprising the esters whose homopolymer has a Tg greater than -20 °C but not including the esters having active hydrogens able to react with isocyanate groups;
      (c3) 0.1 to 10 % by weight, based on the total weight of the mixture of monomers (c), of acrylic acid, methacrylic acid or mixtures thereof
   (f) optionally a free radical initiator; and
   (g) optionally a chain transfer agent
(IV) causing the mixture to react to form a dispersion of polyurethane-acrylic polymer hybrid particles comprising from 30 to 70 % by weight of solids.

The percentage by weight of solids in the final dispersion is controlled by selecting the relative quantity of water in which the components are dispersed.

In one embodiment of the present invention the process does not comprise step (II) and components (a) to (e) and (g) are mixed and dispersed together before the reaction step (IV) takes place. In this case a mixture of the polyurethane prepolymer (a), the mixture of (meth)acrylic monomers (b), the mixture of (meth)acrylic monomers (c), optionally the mixture of compounds (d), optionally the chain transfer agent (g) and optionally the catalyst (e) are dispersed in water preferably with the addition of surfactants. An initiator (f) is added and the resulting dispersion (D) is caused to react by heating it so that polyaddition and polymerization of the acrylic monomers occurs simultaneously forming an acrylic polymer-polyurethane hybrid. The process may be conducted in batch as described before or semicontinuously wherein initially only a portion of the initiator (f) is added to a portion of the dispersion (D), and caused to react and subsequently the rest of the dispersion (D) and the rest of the initiator (f) are fed to the reactor over time. A semicontinuous process is preferred.

In another embodiment the process described in the preceding paragraph is carried out but component (c) is not added to the reaction mixture and step (II) is not present. In this case a mixture of the polyurethane prepolymer (a), the mixture of monomers (b), when present, the mixture of compounds (d), when present, the catalyst (e), and when present the chain transfer agent (g) are dispersed in water, preferably with the addition of surfactants. The initiator (f), when present, is added and the resulting dispersion is caused to react by heating it so that polyaddition and polymerization of the acrylic monomers occurs simultaneously forming an acrylic polymer-polyurethane hybrid. The process may be conducted in batch as described before or semicontinuously wherein initially only a portion of the initiator (f) is added to a portion of the dispersion (D), and caused to react and subsequently the rest of the dispersion (D) and the rest of the initiator (f) are fed to the reactor over time). A semicontinuous process is preferred. In this particular embodiment component (b) represents 65 to 99% by weight of the total weight of the mixture of the prepolymer (a) and the mixture of monomers (b).

In another embodiment of the present invention the mixture of polyurethane prepolymers (a), the mixture of acrylic monomers (b), when present, the mixture of compounds (d), when present, the chain transfer agent (g) and, when present, the catalyst (e) are dispersed in water , preferably with the addition of surfactants. The initiator (f), when present, is added and the dispersion (D) is caused to react by heating it so that polyaddition and polymerization of the acrylic monomers occurs simultaneously forming an acrylic polymer-polyurethane hybrid dispersion. The process may be conducted in batch as described before or semicontinuously wherein initially only a portion of the dispersion (D) is added a portion of the initiator (f) and caused to react and subsequently the rest of the dispersion (D) and the rest of the initiator (f) are fed to the reactor over time). A semicontinuous process is preferred. Then the mixture of monomers (c) and, when present, more chain transfer agent (g) are added to the reaction mixture and the monomers are caused to react, optionally using additional initiator (f). This process may be conducted in batch or in semicontinuous (feeding the mixture of monomers (c), the chain transfer agent (g), and optionally the initiator (f) over time). Semicontinuous process is preferred.

In yet another preferred embodiment of the present invention the aqueous dispersion is a miniemulsion. Miniemulsions are submicron stable aqueous dispersions. A comprehensive review on miniemulsion polymerization has been published by J.M. Asua, Prog. Polym. Sci., 2002, 27, 1283-1346. Miniemulsions are meta-stable dispersions that degrade over time by molecular diffusion (Oswald ripening effect). Miniemulsions can be stabilized against Ostwald ripening by the inclusion of a water insoluble compound referred to as hydrophobe. Small molecular weight hydrophobes are more efficient and they are referred as costabilizers. Hexadecane and cetyl alcohol (1-hexadecanol) have been often used as costabilizers, but they are not desirable from the point of view of environmental and health protection regulations because they remain in the final dispersion. In the process according to the invention, the prepolymer can function as hydrophobe and the C₁₂-C₂₄ linear or branched alkyl esters of acrylic and/or methacrylic acid comprised in component (b2) may function as costabilizers. Therefore, no additional hydrophobe/costabilizer is required to prevent Oswald ripening. The standard range of droplet size is often defined as 50 - 500 nm. However, in this invention droplets smaller than 180 are preferred. The technology to prepare miniemulsions of the required size in well known in the art (Manea et al. AICHE J. 2008, 54, 289-297, López et al. Ind. Eng. Chem. Res.2008, 47, 6289-6297) Miniemulsions can be prepared by using ultrasonifiers, rotor-stator systems, static mixers and high pressure homogenizers. High pressure homogenizers are preferred. In a preferred embodiment the joint reaction is performed by miniemulsion polymerization.

In general, polyurethane prepolymers (a) suitable for the process of the invention are commonly obtained by reacting a polyisocyanate with an isocyanate-reactive compound having at least two isocyanate-reactive groups wherein the isocyanate is in excess of the isocyanate-reactive groups so that the resulting polyurethane comprises free unreacted isocyanate groups. In an embodiment of the invention, the prepolymer contains from 1 to 7% by weight, preferably 2 to 6% by weight, most preferably 3 to 5% by weight of unreacted isocyanate groups. The polyurethane prepolymers are well known in the art and include those described herein and any other commercially available.

The diisocyanate used in the preparation of the polyurethane prepolymer (a) consists preferably of at least one diisocyanate, diisocyanate derivative or diisocyanate homolog having two aliphatic or aromatic isocyanate groups.

Examples of suitable aliphatic isocyanates include, but are not limited to, 1,6-diisocyanatohexane (HDI), 1,4-diisocyanatobutane, 1-isocyanato-5-isocyanato-methyl-3,3,5-trimethyl-cyclohexane or isophorone diisocyanate (IPDI), bis(4-isocyanatocyclohexyl)methane, cyclohexane diisocyanate (CHDI), 2,2,4-trimethylhexamethylene diisocyanate (TMDI), 1,3-bis(isocyanatomethyl) cyclohexane (H₆XDI), 1,1' methylenebis (4-isocyanato)-cyclohexane (H₁₂MDI) and mixtures thereof.

Examples of suitable aromatic isocyanates include, but are not limited to, 2,4and 2,6-diisocyanatoluene or toluene diisocyanate (TDI), paraphenylene diisocyanate (PPDI), bis(4-isocyanatophenyl)methane and its 2,4' and 2,2' isomers (MDI), polymeric MDI, tetramethylxylene diisocyanate (TMXDI), naphthalene 1,5-diisocyanate (NDI), 1,3-bis(1-isocyanato-1-methylethyl)benzene, m-xylylene diisocyanate and mixtures thereof.

Aliphatic isocyanates, especially aliphatic diisocyanates are preferred being isophorone diisocyanate (IPDI) particularly preferred.

The compound having isocyanate-reactive groups suitable for the preparation of the prepolymers are those containing at least two isocyanate-reactive groups selected from the groups comprising amino, carboxyl and hydroxyl, preferably hydroxyl. Particularly preferred isocyanate-reactive compounds are polyols having two or more hydroxyl groups and an average molecular mass (number average Mn) of from 500 to 6000 Dalton, in particular based of the polyether polyol and/or polyester polyol type. Polyethers include polyethylene glycols, polypropylene glycols, mixed polyglycols based on ethylene oxide and propylene oxide, polytetramethylene glycols and polytetrahydrofurans. Linear or difunctional glycols having an average molecular mass (number average Mn) of from 900 to 4000 Dalton are preferably used.

Aliphatic or aromatic polyesterpolyols are obtained by polycondensation reaction and/or polyaddition reaction of diols and dicarboxylic acids, and their anhydrides and esters. For example, condensates based on 1,2-ethanediol or ethylene glycol, 1,4-butanediol or 1,4-butylene glycol, 1,6-hexanediol or 1,6-hexamethylene glycol and 2,2-dimethyl-1,3-propanediol or neopentyl glycol and 1,6-hexanedioic acid or adipic acid and 1,3-benzenedicarboxylic acid or isophthalic acid can be used as suitable aliphatic or aromatic polyesters. Linear or difunctional aliphatic or aromatic polyesterpolyols having an average molecular mass (number average Mn) of from 900 to 4000 Dalton are preferred. Polycarbonates and polycaprolactones likewise belong to the polyester group. The former are obtained by reacting phosgene or aliphatic or aromatic carbonates, such as, for example, diphenyl carbonate or diethyl carbonate, with dihydric or polyhydric alcohols. The latter are prepared by polyaddition of lactones, such as, for example, ε-caprolactone, with initiator compounds having reactive hydrogen atoms, such as water, alcohols, amines or bisphenol A. Synthetic combinations of polyesters, polycaprolactones and polycarbonates are also possible.

In an embodiment of the present invention the polyurethane prepolymer (a) is further **characterized in that** it is neither water soluble nor water dispersible, i.e. it is substantially devoid of hydrophilic ionic groups such as free carboxylic acid or sulfonates, or nonionic moieties such as metoxy polyethylene glycol and polyethylene oxide. By substantially devoid it is understood that either no hydrophilic groups are present in prepolymer or that they are present at a low proportion which is unable to confer water dispersibility to the prepolymer. The term water dispersable is understood to mean polymers which when they are suspended in water, spontaneously form stable dispersions.

In another embodiment of the present invention the polyurethane prepolymer does not comprise double bonds.

In yet another embodiment of the present invention, the polyurethane prepolymer (a) is a commercial available isocyanate terminated polyurethane prepolymer such as Incorez 701, commercialized by Industrial Copolymers Limited, having approximately 4% free unreacted isocyanate groups.

Component (b1) is selected from the esters of acrylic acid or methacrylic acid whose homopolymers have a Tg of less than -20 °C excluding the esters having active hydrogens able to react with isocyanate groups and mixtures thereof. Examples of suitable esters in this group include, but are not limited to ethyl acrylate, n-propyl acrylate, iso-butyl acrylate, n-butyl acrylate, 2-ethylhexyl acrylate, n-hexyl acrylate, n-octyl acrylate, n-nonyl acrylate, n-dodecyl methacrylate, 2-ethoxyethyl acrylate, 2-methoxyethyl acrylate and/or mixtures thereof. Esters of acrylic acid or methacrylic acid comprising a functional group having active hydrogen atoms capable of reacting with the unreacted isocyanate groups of the polyurethane prepolymer are not considered to form part of this group even if their homopolymer has a Tg below -20°C.

In an embodiment of the invention component (b1) represents from 78 to 99.6% by weight, preferably 85.5 to 99.6 by weight, more preferably 85.5 to 97% of the total weight of the mixture of monomers (b).In another embodiment of the present invention component (b1) is selected from the esters of acrylic acid whose homopolymers have a Tg of less than -20°C excluding the esters having active hydrogens able to react with isocyanate groups-

Component (b2) is selected from the esters of acrylic acid or methacrylic acid whose homopolymers have a Tg above -20°C, preferably above 0°C excluding the esters having active hydrogens able to react with isocyanate groups and mixtures thereof. Examples of esters in this group include, but are not limited to methyl acrylate, methyl methacrylate, iso-propyl acrylate, iso-propyl methacrylate, n-butyl methacrylate, tert-butyl acrylate, tert-butyl methacrylate, cyclohexyl acrylate, cyclohexyl methacrylate, hexadecyl acrylate, hexadecyl methacrylate, benzyl acrylate, benzyl methacrylate, octadecyl acrylate, and the mixtures thereof. Esters of acrylic acid comprising a functional group having an active hydrogen capable of reacting with the unreacted isocyanate groups of the polyurethane prepolymer are not considered to form part of this group even if their homopolymer has a Tg of more than -20°C.

In one embodiment, component (b2) comprises at least one ester of acrylic acid.

In another embodiment, component (b2) comprises one ester of acrylic acid and at least another ester of acrylic or methacrylic acid.

In another embodiment component (b2) represents from 0.1 to 20%, preferably from 0.1 to 15%, more preferably from 0.1 to 13% and most preferably from 4 to 13% by weight of the total amount of the monomer mixture (b).

In yet another embodiment component (b2) comprises from 0.1 to 6% by weight, preferably from 1 to 5% by weight, more preferably from 2 to 4% by weight of the total amount of monomers (b) of at least one C₁₂-C₂₄ linear or branched alkyl ester of acrylic or methacrylic acid.

Component (b3) is selected from the group consisting of esters of acrylic or methacrylic acid comprising a functional group having an active hydrogen capable of reacting with the unreacted isocyanate groups of the polyurethane prepolymer and mixtures thereof. Examples of such groups are hydroxyl groups, amino groups and glycidyl groups. Suitable monomers of this type are, but not limited to 2-hydroxyethyl acrylate, 2-hydroxyethyl methacrylate, 2-hydroxypropyl acrylate, 2-hydroxypropyl methacrylate, tert-butylaminoethyl methacrylate and glycidyl methacrylate and/or the mixtures thereof. There are no limitations in terms of the glass transition temperature of the homopolymer of these monomers. In an embodiment of the present invention (b3) is selected from the group consisting of esters of acrylic or methacrylic acid having at least one hydroxyl group. In a more particular embodiment 2-hydroxyethyl methacrylate is preferred.

In an embodiment of the present invention component (b3) represents from 0.2 to 2% by weight, preferably 0.2 to 1.5% by weight, more preferably 0.3 to 0.7 of the total weight of the mixture of monomers (b).

Component (b4) is selected from acrylic acid, methacrylic acid and mixtures thereof. In an embodiment of the present invention component (b4) is methacrylic acid.

In an embodiment of the invention component (b4) represents from 0.1 to 5% by weight, preferably 0.1 to 3% by weight, more preferably 0.1 to 1.5% by weight and most preferably 0.3 to 1.0% by weight based on the total weight of the mixture of monomers (b).

As herein above described component (c) is optional (it may be added at a level of 0% based on the total weight of the mixture of monomers (b)).

Component (c1) is selected from the esters of acrylic acid or methacrylic acid whose homopolymers have a Tg of less than -20 °C excluding the esters having active hydrogens able to react with isocyanate groups and mixtures thereof. Examples of suitable esters in this group include, but are not limited to ethyl acrylate, n-propyl acrylate, iso-butyl acrylate, n-butyl acrylate, 2-ethylhexyl acrylate, n-hexyl acrylate, n-octyl acrylate, n-nonyl acrylate, n-dodecyl methacrylate, 2-ethoxyethyl acrylate, 2-methoxyethyl acrylate and/or mixtures thereof. Esters of acrylic acid or methacrylic acid comprising a functional group having active hydrogen atomsn capable of reacting with the unreacted isocyanate groups of the polyurethane prepolymer are not considered to form part of this group even if their homopolymer has a Tg below -20 °C.

In an embodiment of the invention component (c1) represents from 80 to 99.8% by weight, preferably 87 to 99.8% by weight, more preferably from 90 to 99% by weight, based on the total weight of the mixture of monomers (c).

Component (c2) is selected from the esters of acrylic acid or methacrylic acid whose homopolymers have a Tg above -20 °C, preferably above 0°C excluding the esters having active hydrogens able to react with isocyanate groups and mixtures thereof. Examples of esters in this group include, but are not limited to methyl acrylate, methyl methacrylate, iso-propyl acrylate, iso-propyl methacrylate, n-butyl methacrylate, tert-butyl acrylate, tert-butyl methacrylate, cyclohexyl acrylate, cyclohexyl methacrylate, hexadecyl acrylate, hexadecyl methacrylate, benzyl acrylate, benzyl methacrylate, octadecyl acrylate and the mixtures thereof. Esters of acrylic acid comprising a functional group having an active hydrogen capable of reacting with the unreacted isocyanate groups of the polyurethane prepolymer are not considered to form part of this group even if their homopolymer has a Tg of more than -20 °C.

In an embodiment of the invention component (c2) represents from 0.1 to 15% by weight, preferably 0.1 to 10% by weight, more preferably from 0.5 to 5% by weight, based on the total weight of the mixture of monomers (c).

Component (c3) is selected from acrylic acid, methacrylic acid and mixtures thereof.

In an embodiment of the invention component (c3) represents from 0.1 to 5% by weight, preferably 0.1 to 3% by weight, more preferably from 0.5 to 2% by weight, of the total weight of the mixture of monomers (c).

If desired, component (d) may be added to the reaction mixture of (a), (b) and (c). Component (d) preferably represents from 0.1 to 30% by weight, more preferably from 0.5 to 20% by weight of (a) and comprises a compound or mixture of compounds which are devoid of double bonds and have at least one active hydrogen capable of reacting with the unreacted isocyanate groups of the polyurethane prepolymer. This component is a reactive low molecular component which may comprise a mixture of compounds having active hydrogens.

In one embodiment of the invention component (d) is selected from compounds having at least two active hydrogens per molecule, or mixtures of such compounds with compounds having one active hydrogen per molecule.

In a preferred embodiment component (d) is selected from the group consisting of low molecular weight diols, polyols, diamines, polyamines, hydroxylamines or mixtures thereof. In one embodiment (d) comprises at least one compound having two active hydrogens per molecule such as a hydroxylamine, a diol or a diamine. In a more particular embodiment (d) comprises a mixture of a compound having two active hydrogens per molecule and a compound having one active hydrogen per molecule. In the context of the present invention low molecular weight compounds are those with a molecular weight under 1000 Daltons.

Non-limiting examples of compound (d) are 4,4'-(propan-2-ylidene)diphenol (commonly known as bisphenol A), 1,4-cyclohexanediol, 1,6-hexanediol, 1,12-dodecanediol, low molecular weight poly(propyleneglycol), 1,4-butanediol, ethylene glycol, diethylene glycol, 1,3 propanediol, 1,4-cyclohexane dimethanol, hydroquinone bis 2-hydroxyethyl ether, ethylene diamine, 2-methyl-1,5-pentanediamine, 1,6-hexanediamine, ethanol amine and blends of two or more of these. Diols and mixtures of diols are preferred. In one embodiment of the invention the diol is selected from 4,4'-(propan-2-ylidene)diphenol and cyclohexanediol.

In an embodiment of the present invention the reaction of component (a) with components (b3) and (d) may optionally be effected in the presence of a catalyst (e) suitable for polyaddition reactions of active hydrogens with polyisocyanates. If required, these catalysts are added in amounts of from 0.01 to 1% by weight, preferably from 0.1 to 1% by weight, more preferably from 0.3 to 1% by weight, based on the total weight of components (a), (b3) and (d). Examples of customary catalysts for polyaddition reactions with polyisocyanates are, but not limited to, dibutyltin oxide, dibutyltin dilaurate (DBTL), tin(II) octanoate, trimethylamine, triethylamine, 1,4-diazabicyclo[2.2.2]octane (DABCO), 1,4-diazabicyclo[3.2.0]-5-nonene (DBN) and 1,5-diazabicyclo[5.4.0]-7-undecene (DBU). The use of organotin compounds is preferred.

In another embodiment of the present invention an initiator for free radical polymerization (f) may be added to the reaction mixture. If required, these initiators are added in amounts of from 0.01 to 1% by weight, preferably from 0.05 to 0.7% by weight, more preferably from 0.10 to 0.5 by weight, based on the total weight of components (b) and (c). The initiator is selected from the group consisting of thermal and/or redox initiators which may be used without any limitation regarding their water solubility. Suitable thermal initiators are well known in the art and comprise, but are not limited to, inorganic peroxides, such as ammonium peroxodisulfate, sodium peroxodisulfate, potassium peroxodisulfate, and hydrogen peroxide; organic peroxides, including percarbonates, diacyl peroxides such as dibenzoyl peroxide, alkyl peroxides such as tert-butyl hydroperoxide, benzoil peroxide, lauroyl peroxide, cumyl hydroperoxide and the like, dialkyl peroxides such as di-tert-butyl hydroperoxide, and acyl alkyl peroxides such as tert-butyl peroxybenzoate; and azo initiators, such as 2,2'-azobis(2-methylbutyronitrile), 2,2'-azobis(2-methylpropio-nitrile), 2,2'-azobisisobutyronitrile and the like. Examples of redox initiators include, but are not limited to, inorganic peroxides paired with a suitable reducing agent such as sulfites, metabisulfites, sodium dithionite, sodium thiosulfate, sodium formaldehydesulphoxylate, a mixture of disodium salt of 2-hydroxy-2-sulphinoacid, of sodium sulphite and of disodium salt of 2-hydroxy-2-sulphoacid, or a mixture of disodium salt of hydro xysulp hino acetic acid and of disodium salt of hydroxysulphoacetic acid, sold respectively under the names of Bruggolite FF6 and Bruggolite FF7 by Bruggemann; and tert-butyl hydroperoxide and hydrogen peroxide paired with ascorbic acid, Bruggolite FF6 and Bruggolite FF7. Water soluble initiators are preferred.

If desired, a chain transfer agent (g) may be used in the present invention to control the molecular weight of the resulting polymer. Examples of useful chain transfer include but are not limited to those selected from the group consisting of long chain alkyl mercaptans such as n-dodecylmercaptan, tert-dodecylmercaptan or the like, carbon tetrabromide, alcohols and the mixtures thereof. Such a chain transfer agent is optionally present in quantities of less than 5, preferably less than 2, more preferably less than 0.5 and most preferably less than 0.20 weight percent, based on the total weight of monomer mixtures (b) and (c).

In a preferred embodiment of the invention at least one of the components (e) and (f) is present. In a particularly preferred embodiment both components are present.

In an embodiment of the invention the aqueous phase contains at least a surfactant or emulsifier which helps stabilize the dispersion by forming an emulsion. Useful emulsifiers for the present invention include those selected from the group consisting of anionic emulsifiers, cationic emulsifiers, nonionic emulsifiers, and mixtures thereof. Anionic and nonionic emulsifiers are preferred. These emulsifier may contain one or more olefinicaly unsaturated group. Polymeric surfactants or surface active oligomers can also be used provided they form micelles when added to the hybrid dispersion.

Examples of anionic emulsifiers include, but are not limited to, alkyl sulfates such as sodium lauryl sulfate, alkyl-aryl sulfonates such as sodium dodecylbenzene sulfonate, polyoxyethylene alkyl ether sulfates, polyoxyethylene alkylphenyl ether sulfates, and diphenyl sulfonate derivatives. Particularly preferred anionic emulsifiers are diphenyl sulfonate derivatives such as those available from Dow Chemical Co under the trade name of Dowfax 2A1 and Dowfax 3B2.

Suitable nonionic emulsifiers include, but are not limited to, polyoxyethylene alkyl ethers or polyoxyethylene alkylphenyl ethers.

Suitable reactive surfactants include, but are not limited to, polyoxyethylene alkylphenyl ethers sold under the trade name of Niogen® (Montello Inc); Polyoxyethylene alkylphenyl ether ammonium sulfates sold under the trade name of Hitenol® (Montello Inc); Maxemul™ 6106 (available from Uniquema), which has both phosphonate ester and ethoxy hydrophilicity; sodium allyloxy hydroxypropyl sulphonate (available from Rhodia as SIPOMER COPS-1™); and allylsulphosuccinate derivatives (such as TREM LT-40™ (available from Henkel).

Suitable polymeric surfactants include, but are not limited to, acrylic polymers commercially available under the trade name "JONCRYL" from BASF.

These emulsifiers may be used alone or in combination of two or more thereof. The amount of the emulsifier used is, for example, from about 0.2 to 10 parts by weight, preferably from about 0.5 to 5 parts by weight, per 100 parts by weight of the total mixture of the prepolymer (a), mixture of monomers (b) and mixture of monomers (c).

In an embodiment of the present invention the polyurethane prepolymer is selected to be soluble in the mixture of monomers (b) and (c), preferably in the mixture of monomers (b).

The adhesive composition according to the present invention comprises from 30 to 70% by weight of solids, preferably from 40 to 60% by weight of solids, dispersed in an aqueous medium, wherein the solids comprise a polyurethane-acrylic hybrid polymer obtainable by processes herein above described.

More specifically the adhesive composition according to the present invention comprises a polyurethane-acrylic hybrid polymer obtainable by a process comprising the steps of:
(I) forming an aqueous dispersion comprising:
   (a) 1 to 35 % by weight, based on the total weight of the mixture of the prepolymer (a), mixture of monomers (b) and mixture of monomers (c), of one or more non water soluble, non water dispersible polyurethane prepolymer comprising free unreacted isocyanate groups
   (b) 45.5 to 99 % by weight, based on the total weight of the mixture of the prepolymer (a), mixture of monomers (b) and mixture of monomers (c), of a mixture of monomers comprising:
      (b1) 67 to 99.6 % by weight, based on the total weight of the mixture of monomers (b), of one or more esters of acrylic acid or methacrylic acid selected from the group comprising the esters whose homopolymer has a Tg of less than -20 °C but not including the esters having active hydrogens able to react with isocyanate groups;
      (b2) 0.1 to 20 % by weight, based on the total weight of the mixture of monomers (b), of one or more esters of acrylic acid or methacrylic acid selected from the group comprising the esters whose homopolymer has a Tg greater than -20 °C but not including the esters having active hydrogens able to react with isocyanate groups;
      (b3) 0.2 to 3 % by weight, based on the total weight of the mixture of monomers (b), of one or more esters of acrylic or methacrylic acid comprising a functional group having an active hydrogen capable of reacting with the unreacted isocyanate groups of the polyurethane prepolymer; and
      (b4) 0.1 to 10 % by weight, based on the total weight of the mixture of monomers (b), of acrylic acid, methacrylic acid or mixtures thereof
   (d) optionally, one or more compounds devoid of double bonds and having at least one active hydrogen capable of reacting with the unreacted isocyanate groups of the polyurethane prepolymer;
   (e) optionally, a catalyst;
   (f) optionally, a free radical initiator; and
   (g) optionally, a chain transfer agent
(II) optionally causing the dispersion to react
(III) optionally adding:
   (c) 0 to 43% by weight, based on the total weight of the mixture of monomers (b), of a mixture of monomers optionally dispersed in water comprising:
      (c1) 70 to 99.8 % by weight, based on the total weight of the mixture of monomers (c), of one or more esters of acrylic acid selected from the group comprising the esters whose homopolymer has a Tg of less than -20 °C but not including the esters having active hydrogens able to react with isocyanate groups;
      (c2) 0.1 to 20 % by weight, based on the total weight of the mixture of monomers (c), of one or more ester of acrylic acid or methacrylic acid selected from the group comprising the esters whose homopolymer has a Tg greater than -20 °C but not including the esters having active hydrogens able to react with isocyanate groups;
      (c3) 0.1 to 10 % by weight, based on the total weight of the mixture of monomers (c), of acrylic acid, methacrylic acid or mixtures thereof
   (f) optionally a free radical initiator; and
   (g) optionally a chain transfer agent
(IV) causing the mixture to react to form a dispersion of polyurethane-acrylic polymer hybrid particles comprising from 30 to 70 % by weight of solids.

In one embodiment of the invention the adhesive composition further comprises from 0.1 to 60 wt%, of (a)+(b)+(c) dispersed in the aqueous medium of at least one additive selected from the group consisting of emulsifiers, defoamers, tackifiers, pigments, humectants, fillers, curing agents, thickeners, wetting agents, biocides, adhesion promoters, colorants, waxes, UV stabilizers and antioxidants.

The shear strength of the compositions is measured using the procedures described below.

### Shear resistance:

(a) Holding Power Shear test: the backing used was an electrostatically discharged treated polypropylene film 29 µm thick. Over this backing, latex was spread producing a 120 µm wet film. The film was allowed to dry at ambient temperature for 30 minutes and then placed in an oven at 60°C for 30 minutes. The method consists in applying under pressure a standard area of tape (2.5 cm x 2.5 cm) to a stainless steel (SS) panel and applying a standard weight (1kg) until failure. Measurements were carried out at 70°C. The longer the time required for failure the higher the shear strength.
(b) SAFT test: The backing used was a Polyester PET 23 film 23 µm thick. Latexes were spread over this backing producing a 120 µm wet film. The film was allowed to dry at ambient temperature for 30 min and then kept at 60 °C for 30 minutes. A 2.5 cm x 2.5 cm strip was adhered to a stainless steel substrate. Then, 1 kg weight was applied and the temperature was gradually and constantly increased at 1 °C/min until 210 °C. The temperature at which the weight fall is the SAFT temperature. The higher the SAFT temperature the higher the shear strength at high temperature.

In another aspect the invention is directed to a pressure sensitive coated sheet material comprising a flexible backing sheet and a coating of the adhesive composition as previously defined.

### COMPARATIVE EXAMPLE 1: Standard PSA formulation I

A monomer mixture containing 436.50 g of 2-ethylhexyl acrylate, 4.50 g of methyl methacrylate, 4.50 g of methacrylic acid, 4.50 g of 2-hydroxyethyl methacrylate and 16.2 g of stearyl acrylate was dispersed in an aqueous solution formed by 350.0 g of water, 0.74 g of NaHCO3 and 20 g of Dowfax 2A1 using mechanical means. 60.01 g of an aqueous solution of sodium lauryl sulphate (SLS) containing 3.28 g of SLS was added to the dispersion.

20 % of the dispersion was placed in a 750 ml glass reactor equipped with agitation. Temperature was risen to 80°C and 6.88 g of an aqueous solution of a potassium persulfate (KPS) containing 0.21 g of KPS was added as a shot and reacted over 1 hour. Then, the rest of the dispersion and 21.69 g of a KPS aqueous solution that contained 0.85 g of KPS were fed into the reactor for 3 hours. After that the reactor was maintained at 80 °C for two hours.

| Shear resistance 70°C SS | SAFT (°C) |
|---|---|
| (minutes) | |
| 2.5 ± 0.5 | 137±2 |

### COMPARATIVE EXAMPLE 2: Standard PSA formulation II

A monomer mixture containing 805.5 g of n-butyl acrylate, 49.5 g of methyl methacrylate, 9 g of acrylic acid, 36 g of 2-hydroxyethyl methacrylate and 36 g of stearyl acrylate was dispersed in an aqueous solution formed by 828 g of water and 40.8 g of Dowfax 2A1 using mechanical means.

20 % of the dispersion was placed in a 2L glass reactor equipped with agitation. Temperature was risen to 80°C and 15.5 g of an aqueous solution of a potassium persulfate (KPS) containing 0.85 g of KPS was added as a shot and reacted over 1 hour. Then, the rest of the dispersion and 47.15 g of a KPS aqueous solution that contained 2.60 g of KPS were fed into the reactor for 3 hours. After that the reactor was maintained at 80 °C for other hour.

| SAFT (°C) |
|---|
| 179±43 |

### COMPARATIVE EXAMPLE 3: Hybrid IV. Polyurethane prepolymer devoided of isocyanate groups

A (meth)acrylic monomer mixture (b) containing 373.61 g of n-butyl acrylate (b1), 38.04 g of methyl methacrylate (b2), 17.1 g of stearyl acrylate (b2), 2.78 g of 2-hydroxyethyl methacrylate (b3) and 4.75 g of methacrylic acid (b4) was mixed with 31.25 g of PU devoid of isocyanate groups dissolved in n-butyl acrylate (72% weight/weight) (a). This mixture was dispersed in an aqueous solution formed by 550.0 g of water, 0.75 g of NaHCO3 and 31.6 g of Dowfax 2A1 using mechanical means. 53.0 g of an aqueous solution of sodium lauryl sulphate (SLS) containing 3.0 g of SLS was added to the dispersion.

20 % of the dispersion was placed in a 750 ml glass reactor equipped with agitation. Temperature was risen to 80°C and 7.48 g of an aqueous solution of a potassium persulfate (KPS) (f) containing 0.32 g of KPS was added as a shot and reacted over 1 hour. Then, the rest of the dispersion and 7.33 g of a KPS aqueous solution that contained 0.33 g of KPS were fed into the reactor for 3 hours. After that the reactor was maintained at 80 °C for two hours.

| SAFT (°C) |
|---|
| 140±5°C |

### EXAMPLE 1: Hybrid I

A (meth)acrylic monomer mixture (b) containing 392.85 g of 2-ethylhexyl acrylate (b1), 6.08 g of methyl methacrylate (b2), 16.2 g of stearyl acrylate (b2), 2.02 g of 2-hydroxyethyl methacrylate (b3) and 4.05 g of methacrylic acid (b4), was mixed with 45.0 g of Incorez 701 (a), 8.86 g of bisphenol A (d) and 0.23 g of DBTDL catalyst (e). This mixture was dispersed in an aqueous solution formed by 350.0 g of water, 0.74 g of NaHCO₃ and 18 g of Dowfax 2A1 using mechanical means. 42.7 g of an aqueous solution of sodium lauryl sulphate (SLS) containing 2.7 g of SLS was added to the dispersion.

20 % of the dispersion was placed in a 750 ml glass reactor equipped with agitation. Temperature was risen to 80°C and 6.19 g of an aqueous solution of a potassium persulfate (KPS) (f) containing 0.19 g of KPS was added as a shot and reacted over 1 hour. Then, the rest of the dispersion and 20.1 g of a KPS aqueous solution that contained 0.76 g of KPS were fed into the reactor for 3 hours. After that the reactor was maintained at 80 °C for two hours.

| Shear resistance 70°C SS (hours) | SAFT (°C) |
|---|---|
| More than 65 hours without | >210°C |
| failure | |

### EXAMPLE 2: Hybrid II

A (meth)acrylic monomer mixture (b) containing 362.47 g of 2-ethylhexyl acrylate (b1), 34.43 g of methyl methacrylate (b2), 16.2 g of stearyl acrylate (b2), 4.05 g of 2-hydroxyethyl methacrylate (b3) and 4.05 g of methacrylic acid (b4), was mixed with 45.0 g of Incorez 701 (a), 7.84 g of bisphenol A (d) and 0.23 g of DBTDL catalyst (e). This mixture was dispersed in an aqueous solution formed by 375.0 g of water, 0.74 g of NaHC03 and 18.0 g of Dowfax 2A1 using mechanical means. 16.71 g of an aqueous solution of sodium lauryl sulphate (SLS) containing 2.46 g of SLS was added to the dispersion.

20 % of the dispersion was placed in a 750 ml glass reactor equipped with agitation. Temperature was risen to 80°C and 3.84 g of an aqueous solution of a potassium persulfate (KPS) (f) containing 0.16 g of KPS was added as a shot and reacted over 1 hour. Then, the rest of the dispersion and 14.78 g of a KPS aqueous solution that contained 0.65 g of KPS were fed into the reactor for 3 hours. After that the reactor was maintained at 80 °C for two hours.

| SAFT (°C) |
|---|
| >210°C |

### EXAMPLE 3: Hybrid III

A (meth)acrylic monomer mixture (b) containing 637.7 g of n-butyl acrylate (b1), 63.05 g of methyl methacrylate (b2), 28.5 g of stearyl acrylate (b2), 4.64 g of 2-hydroxyethyl methacrylate (b3) and 7.12 g of methacrylic acid (b4) was mixed with 37.5 g of Incorez 701 (a), 4.21 g of bisphenol A (d) and 0.37 g of DBTDL catalyst (e). This mixture was dispersed in an aqueous solution formed by 600.0 g of water, 1.25 g of NaHC03 and 31.6 g of Dowfax 2A1 using mechanical means. 85.5 g of an aqueous solution of sodium lauryl sulphate (SLS) containing 5.5 g of SLS was added to the dispersion.

20 % of the dispersion was placed in a 2L glass reactor equipped with agitation. Temperature was risen to 80°C and 21.57 g of an aqueous solution of a potassium persulfate (KPS) (f) containing 0.76 g of KPS was added as a shot and reacted over 1 hour. Then, the rest of the dispersion and 77.55 g of a KPS aqueous solution that contained 1.45 g of KPS were fed into the reactor for 3 hours. After that the reactor was maintained at 80 °C for two hours.

| SAFT (°C) |
|---|
| >210°C |

### EXAMPLE 4: Hybrid V

A (meth)acrylic monomer mixture (b) containing 392.85 g of 2-ethylhexyl acrylate (b1), 4.05 g of methyl methacrylate (b2), 16.20 g of stearyl acrylate (b2), 4.05 g of 2-hydroxyethyl methacrylate (b3) and 4.05 g of methacrylic acid (b4) was mixed with 45.0 g of Incorez 701 (a), 6.12 g of bisphenol A (d) and 0.22 g of DBTDL catalyst (e). This mixture was dispersed in and aqueous solution formed by 350.0 g of water, 0.74 g of NaHC03 and 18 g of Dowfax 2A1 using mechanical means. 41.60 g of an aqueous solution of sodium lauryl sulphate (SLS) containing 2.59 g of SLS was added to the dispersion.

20 % of the dispersion was placed in a 750 ml glass reactor equipped with agitation. Temperature was risen to 80°C and 6.80 g of an aqueous solution of a potassium persulfate (KPS) (f) containing 0.23 g of KPS was added as a shot and reacted over 1 hour. Then, the rest of the dispersion and 21.22 g of a KPS aqueous solution that contained 0.75 g of KPS were fed into the reactor for 3 hours. After that the reactor was maintained at 80 °C for two hours.

| Shear resistance 70°C SS (hours) | SAFT (°C) |
|---|---|
| More than 65 hours without | >210°C |
| failure | |

### EXAMPLE 5. Hybrid VI

A (meth)acrylic monomer mixture (b) containing 414.68 g of 2-ethylhexyl acrylate (b1), 4.28 g of methyl methacrylate (b2), 17.16 g of stearyl acrylate (b2), 4.28 g of 2-hydroxyethyl methacrylate (b3) and 4.28 g of methacrylic acid (b4) was mixed with 22.5 g of Incorez 701 (a), 1.12 g of bisphenol A (d) and 0.22 g of DBTDL catalyst (e). This mixture was dispersed in an aqueous solution formed by 350.0 g of water, 0.74 g of NaHC03 and 19.42 g of Dowfax 2A1 using mechanical means. 66.22 g of an aqueous solution of sodium lauryl sulphate (SLS) containing 2.81 g of SLS was added to the dispersion.

20 % of the dispersion was placed in a 750 ml glass reactor equipped with agitation. Temperature was risen to 80°C and 7.05 g of an aqueous solution of a potassium persulfate (KPS) (f) containing 0.18 g of KPS was added as a shot and reacted over 1 hour. Then, the rest of the dispersion and 20.37 g of a KPS aqueous solution that contained 0.73 g of KPS were fed into the reactor for 3 hours. After that the reactor was maintained at 80 °C for two hours.

| Shear resistance 70°C SS (hours) | SAFT (°C) |
|---|---|
| More than 65 hours without | >210°C |
| failure | |

### EXAMPLE 6. Hybrid VII

A (meth)acrylic monomer mixture (b) containing 523.8 g of 2-ethylhexyl acrylate (b1), 6.35 g of methyl methacrylate (b2), 21.6 g of stearyl acrylate (b2), 4.45 g of 2-hydroxyethyl methacrylate (b3) and 5.40 g of methacrylic acid (b4) was mixed with 60.0 g of Incorez 701 (a), 2.57 g of bisphenol A (d) and 0.30 g of DBTDL catalyst (e). This mixture was dispersed in an aqueous solution formed by 500.0 g of water, 0.93 g of NaHC03 and 24 g of Dowfax 2A1 using mechanical means. 56.5 g of an aqueous solution of sodium lauryl sulphate (SLS) containing 3.62 g of SLS was added to the dispersion.

20 % of the dispersion was placed in a 750 ml glass reactor equipped with agitation. Temperature was risen to 80°C and 7.65 g of an aqueous solution of a potassium persulfate (KPS) (f) containing 0.29 g of KPS was added as a shot and reacted over 1 hour. Then, the rest of the dispersion and 29.67 g of a KPS aqueous solution that contained 1.04 g of KPS were fed into the reactor for 3 hours. After that the reactor was maintained at 80 °C for two hours.

| Shear resistance 70°C SS (hours) | SAFT (°C) |
|---|---|
| More than 65 hours without | >210°C |
| failure | |

### EXAMPLE 7. Hybrid VIII

A (meth)acrylic monomer mixture (b) containing 392.85 g of 2-ethylhexyl acrylate (b1), 6.07 g of methyl methacrylate (b2), 16.20 g of stearyl acrylate (b2), 2.03 g of 2-hydroxyethyl methacrylate (b3) and 4.05 g of methacrylic acid (b4) was mixed with 45.0 g of Incorez 701 (a), 0.67 g of bisphenol A (d) and 0.22 g of DBTDL catalyst (e). This mixture was dispersed in an aqueous solution formed by 350.0 g of water, 0.74 g of NaHCO₃ and 18 g of Dowfax 2A1 using mechanical means. 44.52 g of an aqueous solution of sodium lauryl sulphate (SLS) containing 2.86 g of SLS was added to the dispersion.

20 % of the dispersion was placed in a 750 ml glass reactor equipped with agitation. Temperature was risen to 80°C and 6.19 g of an aqueous solution of a potassium persulfate (KPS) (f) containing 0.19 g of KPS was added as a shot and reacted over 1 hour. Then, the rest of the dispersion and 25.57 g of a KPS aqueous solution that contained 0.77 g of KPS were fed into the reactor for 3 hours. After that the reactor was maintained at 80 °C for two hours.

| Shear resistance 70°C SS (hours) | SAFT (°C) |
|---|---|
| More than 65 hours without | >210°C |
| failure | |

### EXAMPLE 8. Hybrid IX

A (meth)acrylic monomer mixture (b) containing 392.85 g of 2-ethylhexyl acrylate (b1), 6.07 g of methyl methacrylate (b2), 16.20 g of stearyl acrylate (b2), 2.03 g of 2-hydroxyethyl methacrylate (b3) and 4.05 g of methacrylic acid (b4) was mixed with 45.0 g of Incorez 701 (a), 0.34 g of 1,4-cyclohexanediol (d) and 0.22 g of DBTDL catalyst (e). This mixture was dispersed in an aqueous solution formed by 350.0 g of water, 0.74 g of NaHCO₃ and 18 g of Dowfax 2A1 using mechanical means. 42.63 g of an aqueous solution of sodium lauryl sulphate (SLS) containing 2,71g of SLS was added to the dispersion.

20 % of the dispersion was placed in a 750 ml glass reactor equipped with agitation. Temperature was risen to 80°C and 6.21 g of an aqueous solution of a potassium persulfate (KPS) (f) containing 0.19 g of KPS was added as a shot and reacted over 1 hour. Then, the rest of the dispersion and 23.93 g of a KPS aqueous solution that contained 0.72 g of KPS were fed into the reactor for 3 hours. After that the reactor was maintained at 80 °C for two hours.

| Shear resistance 70°C SS (hours) | SAFT (°C) |
|---|---|
| More than 65 hours without | 190±4.2°C |
| failure | |

### EXAMPLE 9. Hybrid X

A (meth)acrylic monomer mixture (b) containing 523.8 g of 2-ethylhexyl acrylate (b1), 5.4 g of methyl methacrylate (b2), 21.6 g of stearyl acrylate (b2), 5.4 g of 2-hydroxyethyl methacrylate (b3) and 5.4 g of methacrylic acid (b4) was mixed with 60.0 g of Incorez 701 (a), 8.16 g of bisphenol A (d), 0.30 g of DBTDL catalyst (e) and 0.054 g of n-dodecyl mercaptan (g). This mixture was dispersed in an aqueous solution formed by 500.0 g of water, 0.95 g of NaHCO₃ and 24 g of Dowfax 2A1 using mechanical means. 55.71 g of an aqueous solution of sodium lauryl sulphate (SLS) containing 3.50 g of SLS was added to the dispersion.

20 % of the dispersion was placed in a 750 ml glass reactor equipped with agitation. Temperature was risen to 80°C and 8.76 g of an aqueous solution of a potassium persulfate (KPS) (f) containing 0.31 g of KPS was added as a shot and reacted over 1 hour. Then, the rest of the dispersion and 30.39 g of a KPS aqueous solution that contained 1.11 g of KPS were fed into the reactor for 3 hours. After that the reactor was maintained at 80 °C for two hours.

| Shear resistance 70°C SS (hours) | SAFT (°C) |
|---|---|
| More than 65 hours without | 203±9.2°C |
| failure | |

### EXAMPLE 10. Hybrid XI

A (meth)acrylic monomer mixture (b) containing 392.85 g of 2-ethylhexyl acrylate (b1), 6.08 g of methyl methacrylate (b2), 16.2 g of stearyl acrylate (b2), 2.02g of 2-hydroxyethyl methacrylate (b3) and 4.05 g of methacrylic acid (b4) was mixed with 45.0 g of Incorez 701 (a), 0.67 g of bisphenol A (d) and 0.23 g of DBTDL catalyst (e). This mixture was dispersed in an aqueous solution formed by 350.0 g of water, 0.74 g of NaHCO₃ and 18 g of Dowfax 2A1 using mechanical means. 40.0 g of an aqueous solution of sodium lauryl sulphate (SLS) containing 2.0 g of SLS was added to the dispersion.

20 % of the dispersion was placed in a 750 ml glass reactor equipped with agitation. Temperature was risen to 80°C and 6.0 g of an aqueous solution of a potassium persulfate (KPS) (f) containing 0.19 g of KPS was added as a shot and reacted over 1 hour. Then, the rest of the dispersion and 20.1 f of a KPS aqueous solution that contained 0.76 g of KPS were fed over 3 hours and the mixture was kept to react for another hour.

A second feeding period of 1 hour was carried out, were two streams, the first one composed by a dispersion formed by a (meth)acrylic monomer mixture (c) containing 48.5 g of 2-ethylhexyl acrylate (c1), 1.0 g of methyl methacrylate (c2) and 0.5 g of methacrylic acid (c3) and 0.03 g of n-dodecyl mercaptan (g) dispersed in an aqueous solution formed by 2.22 g of Dowfax 2A1 and 45.0 g of water, and the second one composed by 8.0 g of an aquous solution of potassium persultate (KPS) containing 0.25 g of KPS were fed into the reactor. Finally, the reactor was mantained at 80°C for one hour.

| Shear resistance 70°C SS (hours) | SAFT (°C) |
|---|---|
| More than 65 hours without | >210°C |
| failure | |

### EXAMPLE 11. Hybrid XII

A (meth)acrylic monomer mixture (b) containing 392.85 g of 2-ethylhexyl acrylate (b1), 6.08 g of methyl methacrylate (b2), 16.2 g of stearyl acrylate (b2), 2.02g of 2-hydroxyethyl methacrylate (b3) and 4.05 g of methacrylic acid (b4) was mixed with 45.0 g of Incorez 701 (a), 0.67 g of bisphenol A (d) and 0.23 g of DBTDL catalyst (e). This mixture was dispersed in an aqueous solution formed by 350.0 g of water, 0.74 g of NaHCO₃ and 18 g of Dowfax 2A1 using mechanical means. 40.0 g of an aqueous solution of sodium lauryl sulphate (SLS) containing 2.0 g of SLS was added to the dispersion.

20 % of the dispersion was placed in a 750 ml glass reactor equipped with agitation. Temperature was risen to 80°C and 6.0 g of an aqueous solution of a potassium persulfate (KPS) (f) containing 0.19 g of KPS was added as a shot and reacted over 1 hour. Then, the rest of the dispersion and 20.1 f of a KPS aqueous solution that contained 0.76 g of KPS were fed over 3 hours and the mixture was kept to react for another hour.

A second feeding period of 1 hour was carried out, were two streams, the first one composed by a dispersion formed by a (meth)acrylic monomer mixture (c) containing 48.5 g of 2-ethylhexyl acrylate (c1), 1.0 g of methyl methacrylate (c2) and 0.5 g of methacrylic acid (c3) and 0.05 g of n-dodecyl mercaptan (g) dispersed in an aqueous solution formed by 2.22 g of Dowfax 2A1 and 45.0 g of water, and the second one composed by 8.0 g of an aquous solution of potassium persultate (KPS) containing 0.25 g of KPS were fed into the reactor. Finally, the reactor was mantained at 80°C for one hour.

| Shear resistance 70°C SS (hours) | SAFT (°C) |
|---|---|
| More than 65 hours without | 198±7°C |
| failure | |

## Claims

1. A process for manufacturing an adhesive composition comprising the steps of:
(I) forming an aqueous dispersion comprising:
(a) 1 to 35 % by weight, based on the total weight of the mixture of the prepolymer (a), mixture of monomers (b) and mixture of monomers (c), of one or more non water soluble, non water dispersible polyurethane prepolymer comprising free unreacted isocyanate groups
(b) 45.5 to 99 % by weight, based on the total weight of the mixture of the prepolymer (a), mixture of monomers (b) and mixture of monomers (c), of a mixture of monomers comprising:
(b1) 67 to 99.6 % by weight, based on the total weight of the mixture of monomers (b), of one or more esters of acrylic acid or methacrylic acid selected from the group comprising the esters whose homopolymer has a Tg of less than -20 °C but not including the esters having active hydrogens able to react with isocyanate groups;
(b2) 0.1 to 20 % by weight, based on the total weight of the mixture of monomers (b), of one or more esters of acrylic acid or methacrylic acid selected from the group comprising the esters whose homopolymer has a Tg greater than -20 °C but not including the esters having active hydrogens able to react with isocyanate groups;
(b3) 0.2 to 3 % by weight, based on the total weight of the mixture of monomers (b), of one or more esters of acrylic or methacrylic acid comprising a functional group having an active hydrogen capable of reacting with the unreacted isocyanate groups of the polyurethane prepolymer; and
(b4) 0.1 to 10 % by weight, based on the total weight of the mixture of monomers (b), of acrylic acid, methacrylic acid or mixtures thereof
(d) optionally, one or more compounds devoid of double bonds and having at least one active hydrogen capable of reacting with the unreacted isocyanate groups of the polyurethane prepolymer;
(e) optionally, a catalyst;
(f) optionally, a free radical initiator; and
(g) optionally, a chain transfer agent
(II) causing the mixture from the previous step to react to form a dispersion of polyurethane-acrylic polymer hybrid particles comprising from 30 to 70 % by weight of solids.

2. A process according to claim 1 **characterized in that** the following additional steps are carried out between steps (I) and (II):
(III) causing the dispersion of step (I) to react
(IV) adding to the reaction mixture of step (III):
(c) 0 to 43% by weight, based on the total weight of the mixture of monomers (b), of a mixture of monomers optionally dispersed in water comprising:
(c1) 70 to 99.8 % by weight, based on the total weight of the mixture of monomers (c), of one or more esters of acrylic acid selected from the group comprising the esters whose homopolymer has a Tg of less than -20 °C but not including the esters having active hydrogens able to react with isocyanate groups;
(c2) 0.1 to 20 % by weight, based on the total weight of the mixture of monomers (c), of one or more ester of acrylic acid or methacrylic acid selected from the group comprising the esters whose homopolymer has a Tg greater than -20 °C but not including the esters having active hydrogens able to react with isocyanate groups;
(c3) 0.1 to 10 % by weight, based on the total weight of the mixture of monomers (c), of acrylic acid, methacrylic acid or mixtures thereof
(f) optionally a free radical initiator; and
(g) optionally a chain transfer agent
(V) optionally causing the dispersion to react

3. A process according to claim 1 comprising the steps of:
(I) forming an aqueous dispersion comprising:
(a) 1 to 35 % by weight, based on the total weight of the mixture of the prepolymer (a) and mixture of monomers (b), of one or more non water soluble, non water dispersible polyurethane prepolymer comprising free unreacted isocyanate groups
(b) 65 to 99 % by weight, based on the total weight of the mixture of the prepolymer (a) and mixture of monomers (b), of a mixture of monomers comprising:
(b1) 67 to 99.6 % by weight, based on the total weight of the mixture of monomers (b), of one or more esters of acrylic acid or methacrylic acid selected from the group comprising the esters whose homopolymer has a Tg of less than -20 °C but not including the esters having active hydrogens able to react with isocyanate groups;
(b2) 0.1 to 20 % by weight, based on the total weight of the mixture of monomers (b), of one or more esters of acrylic acid or methacrylic acid selected from the group comprising the esters whose homopolymer has a Tg greater than -20 °C but not including the esters having active hydrogens able to react with isocyanate groups;
(b3) 0.2 to 3 % by weight, based on the total weight of the mixture of monomers (b), of one or more esters of acrylic or methacrylic acid comprising a functional group having an active hydrogen capable of reacting with the unreacted isocyanate groups of the polyurethane prepolymer; and
(b4) 0.1 to 10 % by weight, based on the total weight of the mixture of monomers (b), of acrylic acid, methacrylic acid or mixtures thereof
(d) optionally, one or more compounds devoid of double bonds and having at least one active hydrogen capable of reacting with the unreacted isocyanate groups of the polyurethane prepolymer;
(e) optionally, a catalyst;
(g) optionally, a chain transfer agent
(Ia) adding a free radical initiator (f)
(II) causing the mixture to react to form a dispersion of polyurethane-acrylic polymer hybrid particles comprising from 30 to 70 % by weight of solids.

4. A process according to claim 2 **characterized in that** component (c) is present in an amount up to 43% by weight, based on the total weight of the mixture of monomers (b) and **in that** the dispersion from step (I) is caused to react before the addition of component (c).

5. The process according to any of the preceding claims wherein the aqueous phase contains at least one surfactant.

6. The process according to any of the preceding claims wherein component (b2) comprises from 0.1 to 6% by weight of the total amount of monomers (b) of at least one C₁₂-C₂₄ linear or branched alkyl ester of acrylic or methacrylic acid.

7. The process according to any of the preceding claims wherein compound (b3) is an acrylate or methacrylate ester having at least one hydroxyl group.

8. The process according to any of the preceding claims wherein component (d) is selected from compounds having at least two active hydrogens per molecule, or mixtures of such compounds with compounds having one active hydrogen per molecule.

9. The process of claim 8 wherein component (d) is selected from the group consisting of diols, polyols, diamines, polyamines, hydroxylamines with a molecular weight up to 1000 Daltons or mixtures thereof.

10. The process of claim 9 wherein component (d) is a diol.

11. The process according to any of the preceding claims wherein the aqueous dispersion is a miniemulsion.

12. An adhesive composition obtainable by the process as defined in anyone of the preceding claims.

13. An adhesive composition according to claim 12 wherein the composition further comprises from 0.1 to 60 wt% of (a)+(b)+(c) dispersed in the aqueous medium of at least one additive selected from the group consisting of emulsifiers, defoamers, tackifiers, pigments, humectants, fillers, curing agents, thickeners, wetting agents, biocides, adhesion promoters, colorants, waxes, UV stabilizers and antioxidants.

14. A pressure sensitive coated sheet material comprising a flexible backing sheet and a coating of the adhesive composition as defined in anyone of claims 12 and 13.

## Patentansprüche

1. Verfahren zur Herstellung einer Klebstoffzusammensetzung, umfassend die Schritte:
(I) Bilden einer wässrigen Dispersion umfassend:
(a) 1 bis 35 Gew.%, bezogen auf das Gesamtgewicht der Mischung des Präpolymers (a), der Monomerenmischung (b) und der Monomerenmischung (c), eines oder mehrerer nicht-wasserlöslicher, nichtwasserdispergierbarer Polyurethan-Präpolymere, die freie nicht-umgesetzte Isocyanatgruppen umfassen;
(b) 45,5 bis 99 Gew.%, bezogen auf das Gesamtgewicht der Mischung des Präpolymers (a), der Monomerenmischung (b) und der Monomerenmischung (c), einer Monomerenmischung, umfassend:
(b1) 67 bis 99,6 Gew.%, bezogen auf das Gesamtgewicht der Monomerenmischung (b), eines oder mehrerer Acrylsäure- oder Methacrylsäureester, ausgewählt aus der Gruppe umfassend die Ester, deren Homopolymer einen Tg von niedriger als -20°C aufweist, aber nicht eingeschlossen die Ester mit aktiven Wasserstoffen, die in der Lage sind, mit Isocyanatgruppen zu reagieren;
(b2) 0,1 bis 20 Gew.%, bezogen auf das Gesamtgewicht der Monomerenmischung (b), eines oder mehrerer Acrylsäure- oder Methacrylsäureester, ausgewählt aus der Gruppe umfassend die Ester, deren Homopolymer einen Tg von höher als -20°C aufweist, aber nicht eingeschlossen die Ester mit aktiven Wasserstoffen, die in der Lage sind, mit Isocyanatgruppen zu reagieren;
(b3) 0,2 bis 3 Gew.%, bezogen auf das Gesamtgewicht der Monomerenmischung (b), eines oder mehrerer Acrylsäure- oder Methacrylsäureester, umfassend eine funktionelle Gruppe mit einem aktiven Wasserstoff, der in der Lage ist, mit den nicht-umgesetzten Isocyanatgruppen des Polyurethan-Präpolymers zu reagieren; und
(b4) 0,1 bis 10 Gew.%, bezogen auf das Gesamtgewicht der Monomerenmischung (b), Acrylsäure, Methacrylsäure oder Mischungen davon;
(d) gegebenenfalls eine oder mehrere Verbindungen ohne Doppelbindung und mit wenigstens einem aktiven Wasserstoff, der in der Lage ist, mit den nicht-umgesetzten Isocyanatgruppen des Polyurethan-Präpolymers zu reagieren;
(e) gegebenenfalls einen Katalysator;
(f) gegebenenfalls einen freien Radikalinitiator; und
(g) gegebenenfalls ein Kettentransfermittel;
(II) Umsetzen der Mischung aus dem vorhergehenden Schritt, um eine Dispersion von Polyurethan-Acryl-Polymer-Hybridpartikeln, umfassend 30 bis 70 Gew.% Feststoffe, zu bilden.

2. Verfahren gemäß Anspruch 1, **dadurch gekennzeichnet, dass** die nachstehenden zusätzlichen Schritte zwischen den Schritten (I) und (II) durchgeführt werden:
(III) Umsetzen der Dispersion aus Schritt (I);
(IV) Zugeben zur Reaktionsmischung aus Schritt (III) :
(c) 0 bis 43 Gew.%, bezogen auf das Gesamtgewicht der Monomerenmischung (b), einer gegebenenfalls in Wasser dispergierten Monomerenmischung, umfassend:
(c1) 70 bis 99,8 Gew.%, bezogen auf das Gesamtgewicht der Monomerenmischung (c), eines oder mehrerer Acrylsäureester, ausgewählt aus der Gruppe umfassend die Ester, deren Homopolymer einen Tg von niedriger als -20°C aufweist, aber nicht eingeschlossen die Ester mit aktiven Wasserstoffen, die in der Lage sind, mit Isocyanatgruppen zu reagieren;
(c2) 0,1 bis 20 Gew.%, bezogen auf das Gesamtgewicht der Monomerenmischung (c), eines oder mehrerer Acrylsäure- oder Methacrylsäureester, ausgewählt aus der Gruppe umfassend die Ester, deren Homopolymer einen Tg von höher als -20°C aufweist, aber nicht eingeschlossen die Ester mit aktiven Wasserstoffen, die in der Lage sind, mit Isocyanatgruppen zu reagieren;
(c3) 0,1 bis 10 Gew.%, auf Basis des Gesamtgewichts der Monomerenmischung (c), Acrylsäure, Methacrylsäure oder Mischungen davon;
(f) gegebenenfalls einen freien Radikalinitiator; und
(g) gegebenenfalls ein Kettentransfermittel;
(V) gegebenenfalls Umsetzen der Dispersion.

3. Verfahren gemäß Anspruch 1, umfassend die Schritte:
(I) Bilden einer wässrigen Dispersion, umfassend:
(a) 1 bis 35 Gew.%, bezogen auf das Gesamtgewicht der Mischung des Präpolymers (a) und der Monomerenmischung (b), eines oder mehrerer nicht-wasserlöslicher, nichtwasserdispergierbarer Polyurethan-Präpolymere, die freie nicht-umgesetzte Isocyanatgruppen umfassen;
(b) 65 bis 99 Gew.%, bezogen auf das Gesamtgewicht der Mischung des Präpolymers (a) und der Monomerenmischung (b), einer Monomerenmischung, umfassend:
(b1) 67 bis 99,6 Gew.%, bezogen auf das Gesamtgewicht der Monomerenmischung (b), eines oder mehrerer Acrylsäure- oder Methacrylsäureester, ausgewählt aus der Gruppe umfassend die Ester, deren Homopolymer einen Tg von niedriger als -20°C aufweist, aber nicht eingeschlossen die Ester mit aktiven Wasserstoffen, die in der Lage sind, mit Isocyanatgruppen zu reagieren;
(b2) 0,1 bis 20 Gew.%, bezogen auf das Gesamtgewicht der Monomerenmischung (b), eines oder mehrerer Acrylsäure- oder Methacrylsäureester, ausgewählt aus der Gruppe umfassend die Ester, deren Homopolymer einen Tg von höher als -20°C aufweist, aber nicht eingeschlossen die Ester mit aktiven Wasserstoffen, die in der Lage sind, mit Isocyanatgruppen zu reagieren;
(b3) 0,2 bis 3 Gew.%, bezogen auf das Gesamtgewicht der Monomerenmischung (b), eines oder mehrerer Acrylsäure- oder Methacrylsäureester, umfassend eine funktionelle Gruppe mit einem aktiven Wasserstoff, der in der Lage ist, mit den nicht-umgesetzten Isocyanatgruppen des Polyurethan-Präpolymers zu reagieren; und
(b4) 0,1 bis 10 Gew.%, bezogen auf das Gesamtgewicht der Monomerenmischung (b), Acrylsäure, Methacrylsäure oder Mischungen davon;
(d) gegebenenfalls eine oder mehrere Verbindungen ohne Doppelbindung und mit wenigstens einem aktiven Wasserstoff, der in der Lage ist, mit den nicht-umgesetzten Isocyanatgruppen des Polyurethan-Präpolymers zu reagieren;
(e) gegebenenfalls einen Katalysator;
(g) gegebenenfalls ein Kettentransfermittel;
(Ia) Zugabe eines freien Radikalinitiators (f)
(II) Umsetzen der Mischung, um eine Dispersion von Polyurethan-Acryl-Polymer-Hybridpartikeln zu bilden, die 30 bis 70 Gew.% Feststoffe umfasst.

4. Verfahren gemäß Anspruch 2, **dadurch gekennzeichnet, dass** die Komponente (c) in einer Menge von bis zu 43 Gew.%, bezogen auf das Gesamtgewicht der Monomerenmischung (b), vorhanden ist, und dadurch, dass die Dispersion aus Schritt (I), vor Zugabe der Komponente (c) umgesetzt wird.

5. Verfahren gemäß irgendeinem der vorhergehenden Ansprüche, worin die wässrige Phase wenigstens ein Tensid enthält.

6. Verfahren gemäß irgendeinem der vorhergehenden Ansprüche, worin die Komponente (b2) 0,1 bis 6 Gew.% der Gesamtmenge an Monomeren (b) wenigstens eines geradkettigen oder verzweigten C₁₂₋₂₄-Acrylsäure- oder Methacrylsäurealkylesters umfasst.

7. Verfahren gemäß irgendeinem der vorhergehenden Ansprüche, wobei die Verbindung (b3) ein Acrylat- oder Methacrylatester mit wenigstens einer Hydroxylgruppe ist.

8. Verfahren gemäß irgendeinem der vorhergehenden Ansprüche, wobei die Komponente (d) aus Verbindungen mit wenigstens zwei aktiven Wasserstoffen pro Molekül, oder Mischungen solcher Verbindungen mit Verbindungen, die einen aktiven Wasserstoff pro Molekül aufweisen, ausgewählt ist.

9. Verfahren gemäß Anspruch 8, wobei die Komponente (d) aus der Gruppe bestehend aus Diolen, Polyolen, Diaminen, Polyaminen und Hydroxylaminen mit einem Molekulargewicht von bis zu 1.000 Dalton oder Mischungen davon ausgewählt ist.

10. Verfahren gemäß Anspruch 9, wobei die Komponente (d) ein Diol ist.

11. Verfahren gemäß irgendeinem der vorhergehenden Ansprüche, wobei die wässrige Dispersion eine Miniemulsion ist.

12. Klebstoffzusammensetzung, erhältlich durch das Verfahren wie in irgendeinem der vorhergehenden Ansprüche definiert.

13. Klebstoffzusammensetzung gemäß Anspruch 12, wobei die Zusammensetzung ferner 0,1 bis 60 Gew.% von (a)+(b)+(c), dispergiert in dem wässrigen Medium, wenigstens eines Additivs, ausgewählt aus der Gruppe bestehend aus Emulgatoren, Entschäumungsmitteln, Klebrigmachern, Pigmenten, Feuchthaltemitteln, Füllstoffen, Vernetzungsmitteln, Verdickungsmitteln, Benetzumgsmitteln, Bioziden, Haftvermittlern, Färbemitteln, Wachsen, UV-Stabilisatoren und Antioxidanzien, umfasst.

14. Druckempfindliches beschichtetes Blattmaterial, umfassend ein flexibles Trägerblatt und eine Beschichtung aus der Klebstoffzusammensetzung wie in irgendeinem der Ansprüche 12 und 13 definiert.

## Revendications

1. Procédé de fabrication d'une composition adhésive comprenant les étapes consistant à :
(I) former une dispersion aqueuse comprenant :
(a) de 1 à 35 % en poids, sur la base du poids total du mélange du prépolymère (a), du mélange de monomères (b) et du mélange de monomères (c), d'un ou plusieurs prépolymères de polyuréthane non solubles dans l'eau et non dispersibles dans l'eau comprenant des groupes isocyanate libres qui n'ont pas réagi,
(b) de 45,5 à 99 % en poids, sur la base du poids total du mélange du prépolymère (a), du mélange de monomères (b) et du mélange de monomères (c), d'un mélange de monomères comprenant :
(b1) de 67 à 99,6 % en poids, sur la base du poids total du mélange de monomères (b), d'un ou plusieurs esters d'acide acrylique ou d'acide méthacrylique sélectionnés dans le groupe comprenant les esters dont l'homopolymère a une Tg inférieure à -20°C mais ne comprenant pas les esters ayant des hydrogènes actifs capables de réagir avec les groupes isocyanate ;
(b2) de 0,1 à 20 % en poids, sur la base du poids total du mélange de monomères (b), d'un ou plusieurs esters d'acide acrylique ou d'acide méthacrylique sélectionnés dans le groupe comprenant les esters dont l'homopolymère a une Tg supérieure à -20°C mais ne comprenant pas les esters ayant des hydrogènes actifs capables de réagir avec les groupes isocyanate ;
(b3) de 0,2 à 3 % en poids, sur la base du poids total du mélange de monomères (b), d'un ou plusieurs esters d'acide acrylique ou d'acide méthacrylique comprenant un groupe fonctionnel ayant un hydrogène actif capable de réagir avec les groupes isocyanate du prépolymère de polyuréthane qui n'ont pas réagi ; et
(b4) de 0,1 à 10 % en poids, sur la base du poids total du mélange de monomères (b), d'acide acrylique, d'acide méthacrylique ou de mélanges de ceux-ci ;
(d) facultativement, un ou plusieurs composés dépourvus de doubles liaisons et ayant au moins un hydrogène actif capable de réagir avec les groupes isocyanate du prépolymère de polyuréthane qui n'ont pas réagi ;
(e) facultativement, un catalyseur ;
(f) facultativement, un initiateur de radicaux libres ; et
(g) facultativement, un agent de transfert de chaîne ;
(II) faire réagir le mélange issu de l'étape précédente pour former une dispersion de particules hybrides de polymère polyuréthane-acrylique comprenant de 30 à 70 % en poids de matières solides.

2. Procédé selon la revendication 1, **caractérisé en ce que** les étapes supplémentaires suivantes sont réalisées entre les étapes (I) et (II) :
(III) faire réagir la dispersion de l'étape (I) ;
(IV) ajouter au mélange de réaction de l'étape (III) :
(c) de 0 à 43 % en poids, sur la base du poids total du mélange de monomères (b), d'un mélange de monomères facultativement dispersés dans l'eau comprenant :
(c1) de 70 à 99,8 % en poids, sur la base du poids total du mélange de monomères (c), d'un ou plusieurs esters d'acide acrylique sélectionnés dans le groupe comprenant les esters dont l'homopolymère a une Tg inférieure à -20°C mais ne comprenant pas les esters ayant des hydrogènes actifs capables de réagir avec les groupes isocyanate ;
(c2) de 0,1 à 20 % en poids, sur la base du poids total du mélange de monomères (c), d'un ou plusieurs esters d'acide acrylique ou d'acide méthacrylique sélectionnés dans le groupe comprenant les esters dont l'homopolymère a une Tg supérieure à -20°C mais ne comprenant pas les esters ayant des hydrogènes actifs capables de réagir avec les groupes isocyanate ;
(c3) de 0,1 à 10 % en poids, sur la base du poids total du mélange de monomères (c), d'acide acrylique, d'acide méthacrylique ou de mélanges de ceux-ci ;
(f) facultativement, un initiateur de radicaux libres ; et
(g) facultativement, un agent de transfert de chaîne ;
(V) facultativement faire réagir la dispersion.

3. Procédé selon la revendication 1, comprenant les étapes consistant à :
(I) former une dispersion aqueuse comprenant :
(a) de 1 à 35 % en poids, sur la base du poids total du mélange du prépolymère (a), et du mélange de monomères (b), d'un ou plusieurs prépolymères de polyuréthane non solubles dans l'eau et non dispersibles dans l'eau comprenant des groupes isocyanate libres qui n'ont pas réagi,
(b) de 65 à 99 % en poids, sur la base du poids total du mélange du prépolymère (a) et du mélange de monomères (b), d'un mélange de monomères comprenant :
(b1) de 67 à 99,6 % en poids, sur la base du poids total du mélange de monomères (b), d'un ou plusieurs esters d'acide acrylique ou d'acide méthacrylique sélectionnés dans le groupe comprenant les esters dont l'homopolymère a une Tg inférieure à -20°C mais ne comprenant pas les esters ayant des hydrogènes actifs capables de réagir avec les groupes isocyanate ;
(b2) de 0,1 à 20 % en poids, sur la base du poids total du mélange de monomères (b), d'un ou plusieurs esters d'acide acrylique ou d'acide méthacrylique sélectionnés dans le groupe comprenant les esters dont l'homopolymère a une Tg supérieure à -20°C mais ne comprenant pas les esters ayant des hydrogènes actifs capables de réagir avec les groupes isocyanate ;
(b3) de 0,2 à 3 % en poids, sur la base du poids total du mélange de monomères (b), d'un ou plusieurs esters d'acide acrylique ou d'acide méthacrylique comprenant un groupe fonctionnel ayant un hydrogène actif capable de réagir avec les groupes isocyanate du prépolymère de polyuréthane qui n'ont pas réagi ; et
(b4) de 0,1 à 10 % en poids, sur la base du poids total du mélange de monomères (b), d'acide acrylique, d'acide méthacrylique ou de mélanges de ceux-ci ;
(d) facultativement, un ou plusieurs composés dépourvus de doubles liaisons et ayant au moins un hydrogène actif capable de réagir avec les groupes isocyanate du prépolymère de polyuréthane qui n'ont pas réagi ;
(e) facultativement, un catalyseur ;
(d) facultativement, un agent de transfert de chaîne ;
(Ia) ajouter un initiateur de radicaux libres (f) ;
(II) faire réagir le mélange pour former une dispersion de particules hybrides de polymère de polyuréthane-acrylique comprenant de 30 à 70 % en poids de matières solides.

4. Procédé selon la revendication 2, **caractérisé en ce que** le composant (c) est présent en une quantité allant jusqu'à 43 % en poids, sur la base du poids total du mélange de monomères (b) et **en ce que** la dispersion issue de l'étape (I) est amenée à réagir avant l'addition du composant (c).

5. Procédé selon l'une quelconque des revendications précédentes, dans lequel la phase aqueuse contient au moins un tensioactif.

6. Procédé selon l'une quelconque des revendications précédentes, dans lequel le composant (b2) comprend de 0,1 à 6 % en poids de la quantité totale de monomères (b) d'au moins un ester alkyle linéaire ou ramifié en [C₁₂ à ₂₄] d'acide acrylique ou méthacrylique.

7. Procédé selon l'une quelconque des revendications précédentes, dans lequel le composé (b3) est un ester d'acrylate ou de méthacrylate ayant au moins un groupe hydroxyle.

8. Procédé selon l'une quelconque des revendications précédentes, dans lequel le composant (d) est sélectionné parmi des composés ayant au moins deux hydrogènes actifs par molécule, ou des mélanges de tels composés avec des composés ayant un hydrogène actif par molécule.

9. Procédé selon la revendication 8, dans lequel le composant (d) est sélectionné dans le groupe constitué par les diols, les polyols, les diamines, les polyamines, les hydroxylamines avec un poids moléculaire allant jusqu'à 1000 daltons ou les mélanges de ceux-ci.

10. Procédé selon la revendication 9, dans lequel le composant (d) est un diol.

11. Procédé selon l'une quelconque des revendications précédentes, dans lequel la dispersion aqueuse est une mini-émulsion.

12. Composition adhésive pouvant être obtenue par le procédé tel que défini dans l'une quelconque des revendications précédentes.

13. Composition adhésive selon la revendication 12, dans laquelle la composition comprend en outre de 0,1 à 60 % en poids de (a) + (b) + (c) dispersés dans le milieu aqueux d'au moins un additif sélectionné dans le groupe constitué par les émulsifiants, les agents anti-mousse, les agents poisseux, les pigments, les agents humectants, les charges, les agents de vulcanisation, les épaississants, les agents mouillants, les biocides, les promoteurs d'adhésion, les colorants, les cires, les stabilisateurs d'UV et les antioxydants.

14. Matériau en feuille revêtu sensible à la pression comprenant une feuille de support souple et un revêtement de la composition adhésive telle que définie dans l'une quelconque des revendications 12 et 13.
